# DEMANDE DE BREVET EUROPEEN

(11) **EP 3 321 443 A1**
(43) Date de publication de la demande: **16.05.2018**
(21) Numéro de dépôt: 17197130.2
(22) Date de dépôt: 18.10.2017
(51) Int. Cl.: E04C 2/06, E04C 5/01, C04B 14/48

(54) **DALLE STRUCTURELLE AVEC FIBRES MÉTALLIQUES**

(30) Priorité: 18.10.2016 FR 1660067
(71) Demandeur: Hsols Industriels, 67870 Griesheim Pres Molsheim (FR)
(72) Inventeur: GASPAR, Helder, 77694 KEHL (DE)
(74) Mandataire: Cabinet Bleger-Rhein-Poupon

(57) **Abrégé**

L'invention concerne une dalle structurelle de fondation en béton d'une construction de grande hauteur, cette dalle structurelle comportant au moins :
- du béton ;
- des fibres métalliques dont la masse volumique, par rapport à la dalle structurelle, est d'au moins 40 kg/m3 ;
- une armature métallique en acier dont la masse volumique, par rapport à la dalle structurelle, est comprise entre 10 kg/m3 et 60 kg/m3.

Cette invention concerne, encore, une construction de grande hauteur comportant au moins une telle dalle structurelle ainsi qu'une composition cimentaire pour la réalisation d'une telle dalle structurelle en béton pour une telle construction de grande hauteur.

## Description

La présente invention a trait à une dalle structurelle de fondation en béton d'une construction de grande hauteur.

Cette invention concerne le domaine du bâtiment et, plus particulièrement, celui de la réalisation des dalles structurelles, notamment constituées par des dalles de fondation, et qui supportent la structure globale d'une construction. La présente invention trouvera une application particulièrement adaptée, mais cependant aucunement limitée, à la réalisation d'une dalle structurelle d'une construction industrielle de grande hauteur, notamment un hall de stockage.

L'on connait, d'ores et déjà, des constructions industrielles de grande hauteur, c'est-à-dire dont la hauteur dépasse les 20 mètres et est, usuellement, comprise entre 30 et 40 mètres.

Dans le cas d'une construction industrielle de grande hauteur constituée par un hall de stockage, cette construction comporte une dalle structurelle, des racks pour le stockage de marchandises, des parois latérales et un toit.

De tels racks sont implantés par-dessus la dalle structurelle et sont rendus solidaires de cette dalle structurelle par fixation à l'aide de moyens de fixation (usuellement des ensembles cheville-vis) fixés dans cette dalle.

Une telle fixation nécessite, préalablement à la mise en place de ces moyens de fixation, la réalisation d'un perçage de la dalle structurelle.

Compte tenu du fait que la construction industrielle présente une grande hauteur et que, par conséquent, les racks présentent, également, une grande hauteur, la fixation d'un tel rack doit être réalisée en sorte de résister aux efforts de flexion auxquels sont soumis ces racks et qui ont pour effet de provoquer l'arrachement de ces racks. Aussi et pour assurer une telle fixation, il convient de réaliser, dans la dalle structurelle, des perçages sur une grande profondeur. La réalisation d'un tel perçage nécessite l'utilisation d'un nombre important de mèches et de forets de sections et de longueurs différentes ce qui représente un coût particulièrement élevé.

De plus, une telle dalle structurelle étant réalisée en béton, un tel perçage sur une grande profondeur, d'une part, nécessite une intervention longue et fastidieuse, et, d'autre part, occasionne une usure importante et rapide de ces mèches et de ces forets.

On observera, également, qu'une telle dalle structurelle comporte au moins une armature métallique (usuellement en acier) noyée à l'intérieur de cette dalle structurelle. La présence d'une telle armature métallique peut entraver le perçage, occasionner des dégradations importantes aux mèches et aux forets, et nécessiter l'emploi de mèches et de forets spécifiques et onéreux. L'usure et la dégradation de ces mèches et de ces forets ainsi que le recours à un nombre important de ces mèches et de ces forets, notamment de type spécifique, renchérissent considérablement la fixation des racks sur la dalle structurelle.

On observera, encore, que, dans une construction industrielle de grande hauteur constituée par un hall de stockage, les parois latérales de cette construction peuvent être constituées par un bardage fixé directement sur les racks tandis que le toit peut venir reposer directement sur ces racks. La fixation de ces racks doit, alors, également, reprendre l'ensemble des contraintes exercées sur cette construction de sorte qu'il convient d'augmenter la profondeur des perçages ce qui amplifie les inconvénients mentionnés ci-dessus.

La présente invention se veut de remédier aux inconvénients des constructions de l'état de la technique.

A cet effet, l'invention concerne une dalle structurelle de fondation d'une construction de grande hauteur, cette dalle structurelle comportant au moins :
- du béton ;
- des fibres métalliques dont la masse volumique, par rapport à la dalle structurelle, est d'au moins 40 kg/m3 ;
- une armature métallique en acier dont la masse volumique, par rapport à la dalle structurelle, est comprise entre 10 kg/m3 et 60 kg/m3.

Une autre caractéristique consiste en ce que les fibres métalliques sont des fibres en acier et/ou présentent un diamètre d'au moins 0,8 mm, une résistance à la traction d'au moins 1000 N/mm2, et une longueur comprise entre 40 mm et 80 mm, de préférence de l'ordre de 60 mm.

Encore une autre caractéristique consiste en ce que la dalle structurelle peut, encore, comporter des fibres en matériau polymère, d'une part, qui sont des fibres en matériau polymère thermoplastique, notamment du polypropylène, et, d'autre part, dont la masse volumique, par rapport à la dalle structurelle, est comprise entre 0,5 kg/m3 et 2 kg/m3, de préférence de l'ordre de 1 kg/m3.

L'invention concerne, également, une construction de grande hauteur, qui présente une hauteur d'au moins 12 mètres, qui est constituée par une construction industrielle, plus particulièrement un hall de stockage, et qui comporte au moins une dalle structurelle. Dans cette construction de grande hauteur, la dalle structurelle ou les dalles structurelles présentent les caractéristiques décrites ci-dessus.

L'invention concerne, aussi, une composition cimentaire pour la réalisation d'une dalle structurelle de fondation d'une construction de grande hauteur. Une telle dalle structurelle présente les caractéristiques décrites ci-dessus et cette composition cimentaire comporte au moins :
- du ciment, de l'eau ;
- des fibres métalliques dont la masse volumique, par rapport à la composition cimentaire, est d'au moins 40 kg/m3 et d'au plus 60 kg/m3.

L'invention concerne, encore, une utilisation d'une composition cimentaire pour la réalisation d'une dalle structurelle de fondation d'une construction de grande hauteur. Cette dalle structurelle et la composition cimentaire présentent les caractéristiques décrites ci-dessus.

Finalement, l'invention concerne un procédé de réalisation d'une dalle structurelle de fondation d'une construction de grande hauteur. Cette dalle structurelle présente les caractéristiques décrites ci-dessus tandis que le procédé consiste en ce que :
- on dépose sur le sol une couche d'une composition cimentaire présentant les caractéristiques décrites ci-dessus ;
- on noie au moins une armature métallique en acier à l'intérieur de la couche de composition cimentaire ;
- on laisse durcir la couche de composition cimentaire pour l'obtention de la dalle structurelle de fondation.

Ainsi, l'invention concerne une dalle structurelle de fondation d'une construction de grande hauteur, cette dalle structurelle comportant, d'une part, du béton, d'autre part, des fibres métalliques dont la masse volumique, par rapport à la dalle structurelle, est d'au moins 40 kg/m3 et, d'autre part encore, une armature métallique en acier dont la masse volumique, par rapport à la dalle structurelle, est comprise entre 10 kg/m3 et 60 kg/m3.

Les caractéristiques de cette dalle structurelle permettent, avantageusement, d'améliorer la tenue des moyens de fixation à l'arrachement et, de ce fait, permettent un meilleur ancrage de ces moyens de fixation dans cette dalle structurelle et, par conséquent, une meilleure fixation des racks sur cette dalle.

De plus, par rapport aux dalles structurelles de l'état de la technique et pour une même contrainte d'arrachement, le cône d'arrachement, qui résulte de l'arrachement d'un moyen de fixation et que présente une dalle structurelle conforme à l'invention après un tel arrachement, présente une largeur accrue ainsi qu'une profondeur réduite.

Il en découle que les caractéristiques de la dalle structurelle conforme à l'invention permettent, avantageusement, de réduire la profondeur des perçages destinés à recevoir les moyens de fixation, ceci par rapport aux dalles structurelles de l'état de la technique. Ceci permet, alors, également et avantageusement, de réduire l'épaisseur de la dalle structurelle et, par conséquent, la quantité de matière (béton) nécessaire à la réalisation d'une telle dalle structurelle.

Finalement et de manière surprenante, il a été observé que la présence de fibres métalliques dans la dalle structurelle permettait de reprendre, en partie, certaines contraintes de retrait pour la tenue desquelles les dalles structurelles de l'état de la technique incorporaient des armatures métalliques. Il en découle que la présence de telles fibres métalliques permet, avantageusement, de réduire notablement la quantité d'armature (masse volumique d'armature) dans la dalle structurelle conforme à l'invention, ceci par rapport aux dalles structurelles de l'état de la technique. La reprise de ces contraintes par les fibres métalliques permet, également, de positionner une telle armature métallique plus en profondeur à l'intérieur de la dalle structurelle et non plus à proximité de la surface supérieure d'une dalle structurelle de l'état de la technique. Ceci permet, alors avantageusement, d'éviter qu'une telle armature entrave la réalisation des perçages pour la réception des moyens de fixation.

D'autres buts et avantages de la présente invention apparaîtront au cours de la description qui va suivre se rapportant à des modes de réalisation qui ne sont donnés qu'à titre d'exemples indicatifs et non limitatifs.

La présente invention concerne le domaine du bâtiment et, plus particulièrement, celui de la réalisation d'une dalle structurelle de fondation d'une construction de grande hauteur. Une telle dalle structurelle de fondation est, plus particulièrement, constituée par un radier de fondation. Une telle dalle structurelle supporte la structure globale d'une telle construction.

Une telle dalle structurelle est réalisée en béton et comporte au moins :
- du béton ;
- des fibres métalliques dont la masse volumique, par rapport à la dalle structurelle, est d'au moins 40 kg/m3 (40 kilogrammes par mètre cube) ;
- une armature métallique en acier dont la masse volumique, par rapport à la dalle structurelle, est comprise entre 10 kg/m3 (10 kilogrammes par mètre cube) et 60 kg/m3 (60 kilogrammes par mètre cube).

En ce qui concerne les fibres métalliques, celles-ci présentent une masse volumique, par rapport à la dalle structurelle, comprise, de préférence, entre 40 kg/m3 (40 kilogrammes par mètre cube) et 60 kg/m3 (60 kilogrammes par mètre cube).

Ces fibres métalliques sont constituées par des fibres en acier.

De manière alternative ou (et de préférence) additionnelle, ces fibres métalliques présentent un diamètre d'au moins 0,8 mm (0,8 millimètre) et une résistance à la traction d'au moins 1000 N/mm2 (1000 Newtons par millimètre carré).

Un mode particulier de réalisation consiste en ce que ces fibres métalliques présentent un diamètre d'au moins 0,9 mm (0,9 millimètre) et une résistance à la traction d'au moins 1100 N/mm2 (1100 Newtons par millimètre carré).

Cependant et selon un mode préféré de réalisation, ces fibres métalliques présentent un diamètre d'au moins 1 mm (1 millimètre) et une résistance à la traction d'au moins 1500 N/mm2 (1500 Newtons par millimètre carré).

Finalement, ces fibres métalliques présentent un diamètre d'au plus 1,3 mm (1,3 millimètre) et une résistance à la traction d'au moins 1800 N/mm2 (1800 Newtons par millimètre carré).

Une autre caractéristique consiste en ce que ces fibres métalliques présentent une longueur comprise entre 40 mm (40 millimètres) et 80 mm (80 millimètres), de préférence de l'ordre de 60 mm (60 millimètres).

On observera que, selon un mode de réalisation préféré, ces fibres métalliques présentent un rapport longueur/diamètre (usuellement dénommé élancement) au moins égal à 50, de préférence au moins égal à 60.

Encore une autre caractéristique consiste en ce que les fibres métalliques comportent des moyens d'ancrage et/ou d'accrochage dans le béton.

De tels moyens d'ancrage et/ou d'accrochage peuvent adopter la forme d'une ondulation de la fibre métallique.

De manière alternative, de tels moyens d'ancrage et/ou d'accrochage peuvent adopter la forme d'un crochet d'accrochage équipant au moins une extrémité libre (voire, et de préférence, les deux extrémités libres) d'une telle fibre métallique. Ces fibres métalliques sont, alors, connues sous la dénomination de fibres à crochet.

Un premier exemple de réalisation de l'invention consiste en ce que la dalle structurelle comporte des fibres métalliques dont :
- la masse volumique, par rapport à la dalle structurelle, est d'au moins 40 kg/m3 et d'au plus 60 kg/m3 ;
- le diamètre est de 1 mm (1 millimètre) et la résistance à la traction de 1500 N/mm2 (1500 Newtons par millimètre carré) ;
- la longueur est de l'ordre de 60 mm (60 millimètres) ;
- l'élancement est égal à 60.

Un deuxième exemple de réalisation de l'invention consiste en ce que la dalle structurelle comporte des fibres métalliques dont :
- la masse volumique, par rapport à la dalle structurelle, est d'au moins 40 kg/m3 et d'au plus 60 kg/m3 ;
- le diamètre est de 0.9 mm (0.9 millimètre) et la résistance à la traction de 1160 N/mm2 (1160 Newtons par millimètre carré) ;
- la longueur est de l'ordre de 60 mm (60 millimètres) ;
- l'élancement est égal à 65.

Une autre caractéristique concerne le fait que la dalle structurelle peut, encore, comporter des fibres en matériau polymère dont la masse volumique, par rapport à la dalle structurelle, est comprise entre 0,5 kg/m3 (0,5 kilogrammes par mètre cube) et 2 kg/m3 (2 kilogrammes par mètre cube), de préférence de l'ordre de 1 kg/m3 (1 kilogramme par mètre cube).

En fait, ces fibres en matériau polymère sont des fibres en matériau polymère thermoplastique, notamment du polypropylène.

Tel que mentionné ci-dessus, la dalle structurelle comporte, encore, une armature métallique en acier qui est, de préférence, constituée par au moins un treillis métallique en acier.

En fait, un tel treillis métallique est constitué par un assemblage (de manière perpendiculaire et notamment par soudure) d'un premier jeu de barres métalliques en acier parallèles et d'un deuxième jeu de barres métalliques en acier parallèles.

Ces barres métalliques présentent un diamètre compris entre 6 mm (6 millimètres) et 14 mm (14 millimètres), de préférence de l'ordre de 8 mm (8 millimètres).

Une telle armature métallique est noyée à l'intérieur de la dalle structurelle. A ce propos, on observera que la position et/ou la profondeur d'une telle armature métallique par rapport à une surface supérieure (plus particulièrement sur laquelle peuvent venir reposer des racks et/ou sur laquelle peuvent circuler des engins de manutention) de la dalle structurelle sont calculées en fonction de l'épaisseur de cette dalle structurelle et/ou en fonction de la profondeur (notamment de la profondeur maximale) des perçages à réaliser dans cette dalle structurelle pour la réception de moyens de fixation, notamment pour la fixation de racks sur cette dalle structurelle.

Selon un mode de réalisation particulier, une telle armature métallique est positionnée, d'une part, à proximité d'une surface inférieure de la dalle structurelle opposée à la surface supérieure de cette dalle structurelle et, d'autre part, à une profondeur, par rapport à cette surface supérieure, supérieure à la profondeur des perçages pour la réception des moyens de fixation.

Un mode préféré de réalisation consiste en ce qu'une telle armature métallique est positionnée à une distance d'au moins 3 cm (3 centimètres) de la surface inférieure de la dalle structurelle.

Tel que mentionné ci-dessus, la dalle structurelle comporte du béton qui, selon un mode préféré de réalisation, présente une résistance (notamment à la compression) d'au moins 30 MPa (30 méga Pascals) et une masse volumique, par rapport à la dalle structurelle, comprise entre 1,8 tonnes/m3 (1,8 tonnes par mètre cube) et 2,5 tonnes/m3 (2,5 tonnes par mètre cube).

Une autre caractéristique consiste en ce qu'une telle dalle structurelle présente une épaisseur d'au moins 18 cm (18 centimètres), de préférence d'au moins 20 cm (20 centimètres). De manière alternative ou (et de préférence) additionnelle, cette dalle structurelle présente une épaisseur maximale de 50 cm (50 centimètres), de préférence une épaisseur maximale de 40 cm (40 centimètres).

En fait, cette épaisseur est calculée au moins en fonction de l'épaisseur de l'armature métallique et de la profondeur des perçages pour la réception des moyens de fixation, voire encore en fonction de la distance entre cette armature métallique et la surface inférieure de la dalle structurelle.

L'invention concerne, également, une construction de grande hauteur comportant au moins une dalle structurelle présentant, chacune, les caractéristiques mentionnées ci-dessus.

Une telle construction de grande hauteur présente, en fait, une hauteur d'au moins 12 mètres, de préférence comprise entre 30 et 40 mètres.

Une telle construction de grande hauteur est, de préférence, constituée par une construction industrielle, plus particulièrement un hall de stockage.

Une telle construction comporte, alors, une pluralité de racks pour le stockage de marchandises ainsi que des moyens de fixation pour fixer de tels racks sur la dalle structurelle présentant les caractéristiques décrites ci-dessus.

Les racks s'étendent sensiblement sur toute la hauteur de la construction et présentent, alors, une hauteur d'au moins 12 mètres, de préférence comprise entre 30 et 40 mètres.

De manière additionnelle, cette construction peut comporter des parois latérales constituées par un bardage fixé directement sur les racks, voire encore un toit reposant directement sur ces racks.

L'invention concerne, également, une composition cimentaire pour la réalisation d'une dalle structurelle de fondation d'une construction de grande hauteur. Une telle dalle structurelle et une telle construction de grande hauteur présentant les caractéristiques mentionnées ci-dessus.

Cette composition cimentaire comporte au moins :
- du ciment, de l'eau ;
- des fibres métalliques dont la masse volumique, par rapport à la composition cimentaire, est d'au moins 40 kg/m3 (40 kilogrammes par mètre cube) et d'au plus 60 kg/m3 (60 kilogrammes par mètre cube).

En fait, ces fibres métalliques présentent les caractéristiques décrites ci-dessus.

En particulier, ces fibres métalliques sont en acier et présentent un diamètre d'au moins 0,8 mm, une résistance à la traction d'au moins 1000 N/mm2, et une longueur comprise entre 40 mm et 80 mm, de préférence de l'ordre de 60 mm. Ces fibres présentent un élancement (rapport longueur/diamètre) au moins égal à 50.

Un mode préféré de réalisation consiste en ce que ces fibres métalliques présentent un diamètre de 1 mm (1 millimètre), une résistance à la traction de 1500 N/mm2 (1500 Newtons par millimètre carré), une longueur de l'ordre de 60mm, et un élancement (rapport longueur/diamètre) égal à 60.

Un autre mode préféré de réalisation consiste en ce que ces fibres métalliques présentent un diamètre de 0.9 mm (0.9 millimètre), une résistance à la traction de 1160 N/mm2 (1160 Newtons par millimètre carré), une longueur de l'ordre de 60mm, et un élancement (rapport longueur/diamètre) égal à 65.

De manière additionnelle, cette composition cimentaire peut, encore, comporter des fibres en matériau polymère dont la masse volumique, par rapport à la composition cimentaire, est comprise entre 0,5 kg/m3 (0,5 kilogramme par mètre cube) et 2 kg/m3 (2 kilogrammes par mètre cube), de préférence de l'ordre de 1 kg/m3.

Ces fibres en matériau polymère présentent les caractéristiques décrites ci-dessus. Ces fibres en matériau polymère sont, de préférence, des fibres en matériau polymère thermoplastique, notamment du polypropylène.

Le ciment, que comporte cette composition cimentaire, présente une masse volumique qui, par rapport à la composition cimentaire, est comprise entre 250 kg/m3 (250 kilogrammes par mètre cube) et 400 kg/m3 (400 kilogrammes par mètre cube).

Ce ciment peut être un ciment de type Portland et/ou un ciment à prise rapide.

Cette composition cimentaire comporte, également, de l'eau dont la masse volumique, dans la composition cimentaire, est telle que le rapport de la masse volumique de l'eau sur la masse volumique du ciment est compris entre 0,4 et 0,6, de préférence de l'ordre de 0,5.

Le cas échéant, cette composition cimentaire peut, encore, comporter des adjuvants, plus particulièrement de type anti-retrait, à savoir destinés à s'opposer au retrait de la dalle structurelle.

L'invention concerne, aussi, une utilisation d'une composition cimentaire pour la réalisation d'une dalle structurelle de fondation d'une construction de grande hauteur.

Dans le cadre de cette utilisation, la dalle structurelle et la composition cimentaire présentent les caractéristiques mentionnées ci-dessus.

Finalement, l'invention concerne un procédé de réalisation d'une dalle structurelle de fondation d'une construction de grande hauteur.

Dans le cadre de ce procédé, la dalle structurelle présente les caractéristiques décrites ci-dessus.

Ce procédé consiste en ce que :
- on dépose sur le sol une couche d'une composition cimentaire présentant les caractéristiques décrites ci-dessus ;
- on noie au moins une armature métallique en acier à l'intérieur de la couche de composition cimentaire ;
- on laisse durcir la couche de composition cimentaire pour l'obtention de la dalle structurelle de fondation.

De manière particulière, dans le cadre de ce procédé de réalisation, avant de noyer la ou les armatures à l'intérieur de la couche de composition cimentaire, on dépose tout d'abord cette armature ou ces armatures sur le sol et on dépose ensuite ladite couche de composition cimentaire sur ce sol.

Une autre caractéristique consiste en ce que la couche de la composition cimentaire présente une épaisseur d'au moins 18 cm (18 centimètres), de préférence d'au moins 20 cm (20 centimètres). De manière alternative ou (et de préférence) additionnelle, cette couche cimentaire présente une épaisseur maximale de 50 cm (50 centimètres), de préférence une épaisseur maximale de 40 cm (40 centimètres).

## Revendications

1. Dalle structurelle de fondation d'une construction de grande hauteur, cette dalle structurelle comportant au moins :
- du béton ;
- des fibres métalliques dont la masse volumique, par rapport à la dalle structurelle, est d'au moins 40 kg/m3 ;
- une armature métallique en acier dont la masse volumique, par rapport à la dalle structurelle, est comprise entre 10 kg/m3 et 60 kg/m3.

2. Dalle structurelle selon la revendication 1, **caractérisée par le fait que** les fibres métalliques sont des fibres en acier.

3. Dalle structurelle selon l'une quelconque des revendications précédentes, **caractérisée par le fait que** les fibres métalliques présentent un diamètre d'au moins 0,8 mm, une résistance à la traction d'au moins 1000 N/mm2, et une longueur comprise entre 40 mm et 80 mm, de préférence de l'ordre de 60 mm.

4. Dalle structurelle selon l'une quelconque des revendications précédentes, **caractérisée par le fait que** les fibres métalliques comportent des moyens d'ancrage et/ou d'accrochage dans le béton.

5. Dalle structurelle selon l'une quelconque des revendications précédentes, **caractérisée par le fait qu'**elle comporte, encore, des fibres en matériau polymère, d'une part, qui sont des fibres en matériau polymère thermoplastique, notamment du polypropylène, et, d'autre part, dont la masse volumique, par rapport à la dalle structurelle, est comprise entre 0,5 kg/m3 et 2 kg/m3, de préférence de l'ordre de 1 kg/m3.

6. Dalle structurelle selon l'une quelconque des revendications précédentes, **caractérisée par le fait que** l'armature métallique en acier est constituée par au moins un treillis métallique en acier.

7. Dalle structurelle selon l'une quelconque des revendications précédentes, **caractérisée par le fait que** le béton présente une résistance d'au moins 30 mPa et une masse volumique, par rapport à la dalle structurelle, comprise entre 1,8 tonnes/m3 et 2,5 tonnes/m3.

8. Construction de grande hauteur, qui présente une hauteur d'au moins 12 mètres, qui est constituée par une construction industrielle, plus particulièrement un hall de stockage, et qui comporte au moins une dalle structurelle, **caractérisée par le fait que** la dalle structurelle ou les dalles structurelles sont conformes à l'une quelconque des revendications précédentes.

9. Composition cimentaire pour la réalisation d'une dalle structurelle de fondation d'une construction de grande hauteur, cette dalle structurelle étant conforme à l'une quelconque des revendications 1 à 7, cette composition cimentaire comportant au moins :
- du ciment, de l'eau ;
- des fibres métalliques dont la masse volumique, par rapport à la composition cimentaire, est d'au moins 40 kg/m3 et d'au plus 60 kg/m3.

10. Composition cimentaire selon la revendication 9, **caractérisée par le fait que** les fibres métalliques sont en acier et présentent un diamètre d'au moins 0,8 mm, une résistance à la traction d'au moins 1000 N/mm2, et une longueur comprise entre 40 mm et 80 mm, de préférence de l'ordre de 60 mm.

11. Composition cimentaire selon l'une quelconque des revendications 9 ou 10, **caractérisée par le fait que** le ciment présente une masse volumique qui, par rapport à la composition cimentaire, est comprise entre 250 kg/m3 et 400 kg/m3.

12. Composition cimentaire selon l'une quelconque des revendications 9 à 11, **caractérisée par le fait que** la masse volumique de l'eau dans la composition cimentaire est telle que le rapport de la masse volumique de l'eau sur la masse volumique du ciment est compris entre 0,4 et 0,6, de préférence de l'ordre de 0,5.

13. Composition cimentaire selon l'une quelconque des revendications 9 à 12, **caractérisée par le fait qu'**elle comporte, encore, des fibres en matériau polymère, d'une part, qui sont des fibres en matériau polymère thermoplastique, notamment du polypropylène, et, d'autre part, dont la masse volumique, par rapport à la composition cimentaire, est comprise entre 0,5 kg/m3 et 2 kg/m3, de préférence de l'ordre de 1 kg/m3.

14. Utilisation d'une composition cimentaire pour la réalisation d'une dalle structurelle de fondation d'une construction de grande hauteur, **caractérisée par le fait que** la dalle structurelle est conforme à l'une quelconque des revendications 1 à 7 et que la composition cimentaire est conforme à l'une quelconque des revendications 9 à 13.

15. Procédé de réalisation d'une dalle structurelle de fondation d'une construction de grande hauteur, **caractérisé par le fait que** la dalle structurelle est conforme à l'une quelconque des revendications 1 à 7 et que le procédé consiste en ce que :
- on dépose sur le sol une couche d'une composition cimentaire conforme à l'une quelconque des revendications 9 à 13 ;
- on noie au moins une armature métallique en acier à l'intérieur de la couche de composition cimentaire ;
- on laisse durcir la couche de composition cimentaire pour l'obtention de la dalle structurelle de fondation.
